# EUROPEAN PATENT SPECIFICATION

(11) **EP 2 536 496 B1**
(45) Date of publication and mention of the grant of the patent: **27.03.2019**
(21) Application number: 11707206.6
(22) Date of filing: 17.02.2011
(51) Int. Cl.: B01J 19/24, B01L 7/00

(54) **APPARATUS AND METHOD FOR PROVIDING LOW TEMPERATURE REACTION CONDITIONS**
VORRICHTUNG UND VERFAHREN FÜR REAKTIONSBEDINGUNGEN BEI NIEDRIGEN TEMPERATUREN
DISPOSITIF ET PROCÉDÉ POUR CRÉER DES CONDITIONS DE RÉACTION À BASSE TEMPÉRATURE

(30) Priority: 19.02.2010 GB 201002917
(43) Date of publication of application: 26.12.2012
(73) Proprietor: Vapourtec Limited, Ingham, Suffolk IP31 1NQ (GB)
(72) Inventor: GUTHRIE, Duncan, Alpheton Suffolk CO10 9BW (GB)
(74) Representative: J A Kemp
(86) International application number: PCT/GB2011/000221
(87) International publication number: WO 2011/101635

(56) References cited:
- GB-A- 1 594 576
- GB-A- 2 323 659
- US-A- 5 709 104

## Description

The present invention relates to an apparatus and method for providing low temperature reaction conditions in continuous flow reactions (flow chemistry). It is particularly, but not exclusively, concerned with apparatus and methods which provide for reaction conditions which are significantly below 0°C, and may be as low as -78°C.

There is considerable demand in the flow chemistry field for apparatus which is able to maintain a constant temperature in a reaction vessel whilst a reaction takes place in that vessel. Various approaches have been used to achieve this, ranging from "chilled liquid baths" to hot air heater systems such as that disclosed in Canadian patent application CA 2,586,262A.

However, as the application areas for continuous chemistry has expanded, a demand has emerged for systems which can keep a reaction vessel at a temperature below ambient (often considerably below ambient, down to -78°C). Examples of reactions that require a temperature below ambient and their required temperatures are: organolithium reactions (-40°C to -78°C) and Grignard reactions (0°C to -50°C).

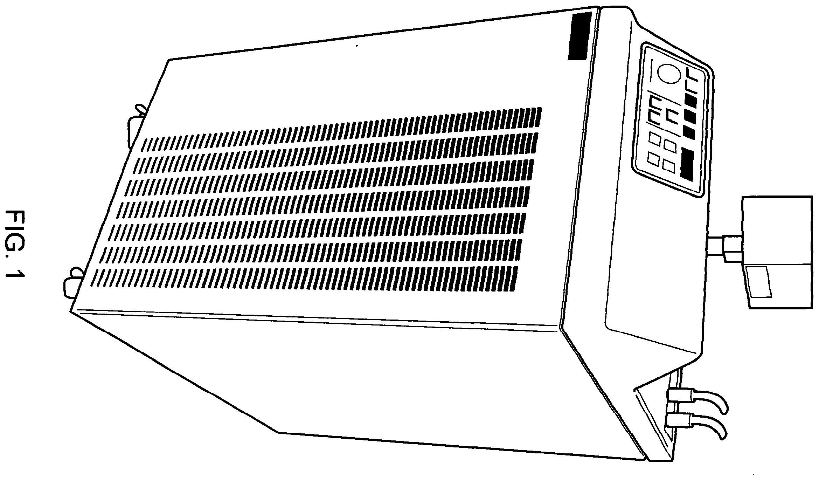

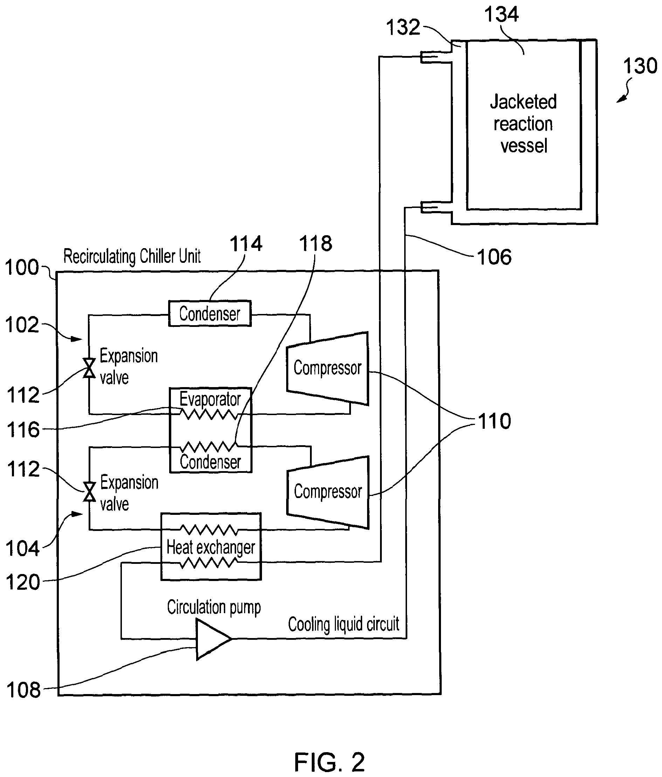

The currently available apparatus for achieving the required reaction conditions for low temperature reactions is a refrigeration system such as that provided by the FTS product "Maxi-Cool" an example of which is illustrated in Figure 1. This system involves at least one refrigeration unit which has a heat exchanger in which a coolant liquid flowing in a heat transfer circuit is cooled by heat exchange with the refrigerant in the refrigeration circuit. The coolant liquid flowing in the heat transfer circuit is fed to the reactor vessel where it passes in a "jacket" around an enclosed portion of the reactor vessel in which the reactants are mixed, thereby cooling the reactants by conduction through the wall of the reactor vessel before returning to the refrigeration unit. A schematic of such a system is shown in Figure 2.

Using a single stage refrigeration unit such as that described above it is possible to maintain the temperature of reactants in the reactor vessel at approximately -30°C. In order to maintain the temperature of reactants in the reactor vessel at lower temperatures, multiple stage (cascade) refrigeration units are used as illustrated in the schematic diagram of Figure 2. Accordingly, in order to maintain reaction temperatures of -70°C or below, it is necessary to use a two stage refrigeration unit of this type.

The two stage refrigeration unit shown schematically in Figure 2 has two heat transfer circuits 102 and 104 comprising a compressor 110 and an expansion valve 112. The first heat transfer circuit 102 has a condenser 114 and an evaporator 116 which is formed in conjunction with the condenser 118 of the second heat transfer circuit 104. The two heat transfer circuits 102 and 104 operate at successively lower temperatures and coolant flowing in a cooling liquid circuit 106 is cooled by passing through a heat exchanger 120 with the second heat transfer circuit 104. The coolant is pumped around the cooling liquid circuit 106 by a circulation pump 108 so that it passes through a jacket 132 of a reaction vessel 130 which surrounds a reaction chamber 134 in which the low temperature reaction is conducted.

Refrigeration units such as those discussed above are generally large units (the FTS Maxi Cool product measures approximately 600 mm x 700 mm x 1200 mm) and are therefore not particularly convenient for experiments done in typical research laboratories as space has to be found for the units and insulated connections provided between the units and the apparatus in which the reaction is being conducted. Further, conducting reactions which are made up of a plurality of separate low temperature reactions (such as the lithiation of epoxides) can require two or more refrigeration units, with attendant pressures on space.

Also, refrigeration units such as those discussed above, when operated at low temperatures, have to use special heat transfer fluids (such as MultiTherm ULT-170 (Registered Trade Mark) supplied by Multi-Therm LLC) in the refrigeration circuit which can be chilled to the desired temperature whilst continuing to flow around the refrigeration circuit. In order to provide for efficient heat transfer between the coolant in the refrigeration circuit and the contents of the reactor vessel, it is necessary for the reactor to provide for flow of the coolant around the surfaces of the reactor vessel. However, this arrangement can cause difficulties due to the toxicity (due to vapour inhalation) of the hydrocarbon heat transfer fluids used and is also messy when disconnecting the reactor, when the coolant in the reactor will need to be collected or disposed of.

Typical coolants used in systems of this type generally have high specific heat capacities. Whilst this allows effective transfer of heat from the reaction vessel to the refrigeration unit for a relative low volume flow of coolant, it has the disadvantage that it is difficult for these systems to respond quickly to changes in desired temperature of the reaction vessel.

This means that it can take considerable time (30 minutes to 2 hours) for the reaction vessel to be cooled to the required temperature in advance of a reaction being carried out, or for changes in the desired temperature to be achieved during the reaction being carried out, or for the system to react to the effects of exo- or endothermic reactions changing the temperature of the reaction vessel.

In order to address the problem of control of temperature, it is known to arrange the system so that the coolant supplied from the refrigeration unit(s) is supplied at a temperature which is appreciably below the required temperature for the reaction vessel, and to provide an additional mechanism, which can be more accurately and rapidly controlled, to supply heat to the fluids immediately prior to entering the volume around the reaction vessel (such as a conductive heater) to raise the temperature from that of the coolant to the desired reactor temperature. Such an arrangement is not only wasteful of resources, but can be complicated to set up and control accurately and increases the demands on the space around the reaction vessel.

Further disadvantages of refrigeration units such as those currently in use are their cost (typically in the range £12,000 to £25,000), the noise generated by the compressors which achieve the cooling and the additional heating effect on the laboratory from running these units.

The present invention seeks to provide methods for conducting low temperature reactions and apparatuses in which low temperature reactions can be conducted which address or avoid one or more of the disadvantages of the existing methods and apparatuses discussed above.
At their broadest, aspects of the present invention provide methods and apparatuses according to claims 1, 14 and 15 in which the temperature of a reaction vessel can be maintained at a required low temperature by arranging a flow of compressed gas across a cooling substrate, the resultant cooled gas being subsequently used to maintain a low temperature in the reaction vessel.

This aspect of the present invention provides a reaction vessel for conducting low temperature reactions according to claim 1.

The cooling medium used may be a gas, a liquid or a solid medium. An example of a liquid cooling medium is liquid nitrogen. An example of a solid cooling medium is crushed dry ice (solid carbon dioxide). An example of a gas cooling medium is the output of the chiller of the second aspect described below. Preferably any non-gaseous cooling medium used is chosen so that it is in gaseous form in the temperature and pressure conditions within the circulation chamber.

The cooling medium may be fed to the reaction chamber from a pressured supply or by pumping (in the case of gaseous or liquid cooling medium) or by a mechanical feed arrangement, such as an augur (in the case of solid cooling medium). Preferably the rate of supply of cooling medium to the reaction chamber is controllable.

Preferably the reaction vessel further comprises a return passage for returning gas from the outside of the circulation chamber to a central portion of the circulation chamber, thereby forming a pathway for re-circulation of gas around the circulation chamber and past the reaction chamber. This arrangement allows cooling gas within the circulation chamber to be circulated in that chamber so that a flow of cooling gas is constantly passing the reaction chamber and maintaining the temperature of the reaction chamber, but for it not to be necessary for this flow of gas to be continuously supplied to the reaction vessel from an outside source. Similarly, it is not necessary for the cooling medium to be continuously supplied to the reaction vessel from an outside source. Where the gas or cooling medium has been supplied from a pressurised source, this means that the gas or cooling medium in that pressurised source is not consumed as rapidly as if there were no re-circulation in the reaction vessel. Further, this arrangement helps to ensure a uniform temperature of the gas circulating in the circulation chamber.

The gas in the circulation chamber which passes the reaction chamber will be referred to herein as "cooling gas" whether that gas is the cooling medium itself, or a gas which results from evaporation or sublimation of the cooling medium, or a separate gas which is cooled by the cooling medium. Similarly, the "cooling gas" may in fact be used to heat the reaction chamber as discussed below.

Preferably the reaction chamber is located radially outside said fan, more preferably directly outside with no intervening components blocking the gas flow from the fan to the reaction chamber. This arrangement causes the action of the fan to force the cooling gas directly over the outer surface(s) of the reaction chamber. The action of the fan tends to agitate the gas in the circulation chamber, thereby reducing or removing any laminar flow and ensuring even temperature distribution of the gas leaving the fan and accordingly passing the reaction chamber.

Preferably the reaction vessel is arranged such that the cooling medium is introduced to the circulation chamber at a position radially inside the fan. This allows the cooling medium to cool the gas inside the fan (for example by mixing with that gas or evaporating or subliming into gaseous form in that area) before the gas is forced radially outwards past the reaction chamber by the fan. This arrangement results in the gas passing the reaction chamber to be some of the coldest in circulation chamber and most easily controlled by controlling the rate of introduction of cooling medium.

If solid or liquid cooling mediums are used, it is likely that at least some of the cooling medium will not immediately evaporate or sublime into gaseous form, but that liquid droplets or fine solid particles will be entrained from the cooling medium into the gas moving through the circulation chamber. This effect is advantageous as the entrained cooling medium will evaporate or sublime and continue to cool the gas within the circulation chamber as it moves within that chamber, thereby allowing a more consistent temperature of the gas within the circulation chamber to be maintained.

Preferably the reaction vessel further comprises a temperature sensor arranged to measure the temperature of the reaction chamber. More preferably the temperature sensor is a contact temperature sensor which contacts an outer surface of the reaction chamber.

In a development of this aspect, the reaction vessel may further comprise a pre-cooling unit contained within said circulation chamber which is arranged to conduct a reagent from outside the reaction vessel to said reaction chamber and to reduce the temperature of said reagent prior to its mixing with other reagents. By causing a reagent to pass through a pre-cooling unit before it is mixed, it is possible to ensure that reagents only come into contact with each other once they have reached the desired temperature and that the overall purpose of maintaining the reaction chamber at a low temperature is not defeated by the reagents being mixed at a higher temperature than that of the reaction chamber and reacting at that temperature.

Preferably all of the reagents which are to be reacted in the reaction chamber pass through pre-cooling units before they are mixed and so there are a plurality of such units, thereby ensuring that all reagents entering the reaction chamber are already at or near the desired temperature.

This arrangement may also assist or ensure that the temperature of the mixed reagents in the reaction chamber is constant, and that there is not a temperature gradient along the reaction chamber caused by reagents entering the reaction chamber at a higher temperature than the desired reaction temperature and being cooled in the reaction chamber itself.

The pre-cooling unit(s) are preferably coils of tube which are placed in the circulation chamber or in the return passage so that the gas flow past the reaction chamber is not affected by these units, but they are in the flow pathway of the gas as it is re-circulated in the circulation chamber and so are cooled by the gas. Alternatively, the pre-cooling unit(s) may be located in the flow of the gas exiting the circulation chamber.

In a further development of this aspect, the reaction vessel may further comprise a pre-mixing vessel having a plurality of inputs and an output which is connected to an input to the reaction chamber, such that reagents can be mixed in said pre-mixing vessel prior to entering said reaction chamber. Providing a pre-mixing vessel can ensure that a good mixture of reagents is achieved, and that once the reagents enter the reaction chamber the incidence of pockets where the concentration of one reagent is particularly high or low can be avoided, thus assisting complete reaction as the reagents pass through the reaction chamber.

Preferably said pre-mixing vessel is located in said circulation chamber, and so is also maintained at a temperature below ambient by said circulation of gas in the circulation chamber.

The pre-mixing vessel is preferably used with the pre-cooling unit(s) described above, in which case the reagent(s) from the pre-cooling unit(s) are fed into the pre-mixing vessel before entering the reaction chamber.

In a further development of this aspect, the reaction vessel may further comprise a quench vessel located in said circulation chamber, which is connected to the output of said reaction chamber and has an input for supply of a quenching solution, thereby allowing the reaction in said reaction chamber to be quenched prior to exiting the reaction vessel and whilst at a reduced temperature. This arrangement avoids or reduces the possibility of unreacted reagents reacting once the mixture has left the reaction vessel and passes through a warmer region (such as the ambient temperature of the laboratory).

A particularly preferred form for the reaction chamber itself is an elongate tube which is wound into a cylindrical configuration inside said circulation chamber. Such a tube is typically 0.1mm-5.0mm in internal diameter with preferred tubes having diameters of 3.0mm. Smaller diameter tubes from 0.050mm upwards may be preferred in the case of highly reactive materials as the small channels will provide the required rate of mass transfer by Brownian motion to achieve adequate mixing of the reactants. Such a tube reaction chamber may be made from plastic fluoropolymer, allowing the tube to be wound into the cylindrical configuration, for example in a helical manner. Such a configuration need not be precisely cylindrical, but may be polygonal in cross section. The cylindrical configuration of the reaction chamber may be made up of a plurality of concentric cylindrical configurations, such as successive windings of the reaction chamber.

An elongate and thin reaction chamber is particularly preferred as it can reduce or avoid a temperature gradient arising across the cross-section of the reaction chamber as the contents of the reaction chamber get further from the inner surface of the reaction chamber and so further from the outer surface of the reaction chamber which is being maintained at the desired temperature. An elongate reaction chamber is also preferred as it provides for a large surface area on the outside of the reaction chamber for the cooling gas to pass over and maintain the surface at the desired temperature.

In one particular arrangement, the circulation chamber has a plurality of longitudinal support members arranged equidistant from the longitudinal axis of said circulation chamber and said reaction chamber is supported by said support members, for example by being wound around those support members, or by being connected to those support members.

In embodiments of the reaction vessel, the reaction chamber is arranged around such support members in a weave pattern. The weave pattern allows good flow of the cooling gas over the surface area of almost the entire reaction chamber, whilst reducing or eliminating the need for further support members or connections to hold the reaction chamber in place. The weave arrangement also presents an obstructed passage for gas forced outwards from the fan thereby causing further agitation of the flow from the fan and assisting in ensuring a uniform temperature of the outer surface of the reactor, since there are few, if any, straight routes through the gaps in the weave pattern. The reaction chamber is also designed to be easily removable so that reaction chambers having different internal volumes may be exchanged. Also should a reaction chamber become blocked then it may be easily replaced.

As the reaction vessel has a circulation chamber in which a cold gas is circulating to maintain the temperature of the reaction chamber at a desired temperature which is below that of the surrounding environment, it is preferable that the reaction vessel further comprises an insulating layer arranged around the outside of said circulation chamber, which reduces the heat transfer from the surrounding environment to the circulation chamber and so improves the efficiency and temperature stability of the reaction vessel.

One particular example of an insulating layer is an outer shell enclosing a vacuum chamber between the outer shell and the outside of the circulation chamber. Additional or alternative forms of insulation may be used and different insulation methods and principles may be combined.

Although the reaction vessel of this aspect has been specifically described in relation to the conduct of low temperature reactions, the skilled person will appreciate that reaction vessels according to this aspect may also be used for reactions in which elevated temperatures are desired, in which case the gas supplied to the circulation chamber would be at a temperature above ambient. Many of the preferred and optional features of this embodiment would also be useful if the reaction vessel was used in this manner.

The reaction vessel of this aspect is suitable for use with the chiller of the second aspect described below, but is not limited to such use.

Accordingly, a further aspect of the present invention provides an apparatus for conducting reactions at low temperature, the apparatus comprising: a pressurised gas source; a chiller according to claim 14.

Further aspects of the present invention relate to a method according to claim 15.

### BRIEF DESCRIPTION OF FIGURES

Embodiments of the present invention will now be described with reference to the accompanying drawings, in which:
Figure 1 shows a known recirculating chiller unit produced by FTS and has already been discussed.
Figure 2 depicts a known system for conducting low temperature reactions utilising one or more refrigeration units and has already been discussed.
Figure 3 shows a cross-section through a chiller according to an embodiment of the present invention.
Figure 4 shows the lid of the chiller of an embodiment of the present invention.
Figure 5 shows a perspective view of a reaction vessel according to an embodiment of the present invention with the outer casing and supporting structure removed.
Figure 6 shows the same perspective view as Figure 5 with the reactor chamber removed.
Figure 7 shows the same perspective view as Figure 5 with the temperature sensor in place.
Figure 8 shows a plan view of the reaction vessel of Figure 5.
Figure 9 shows a cross-section through the complete reaction vessel of the illustrated embodiment along the line marked A-A in Figure 8.
Figure 10 shows the outer casing and supporting structure of the reaction vessel shown in Figure 5.
Figure 11 shows a complete assembled reactor vessel according to an embodiment of the present invention.
Figure 12 shows an apparatus for conducting reactions at a low temperature according to an embodiment of the present invention.
Figure 13 is a graph of temperature measurements taken from an apparatus illustrated in Figure 12.

### DETAILED DESCRIPTION

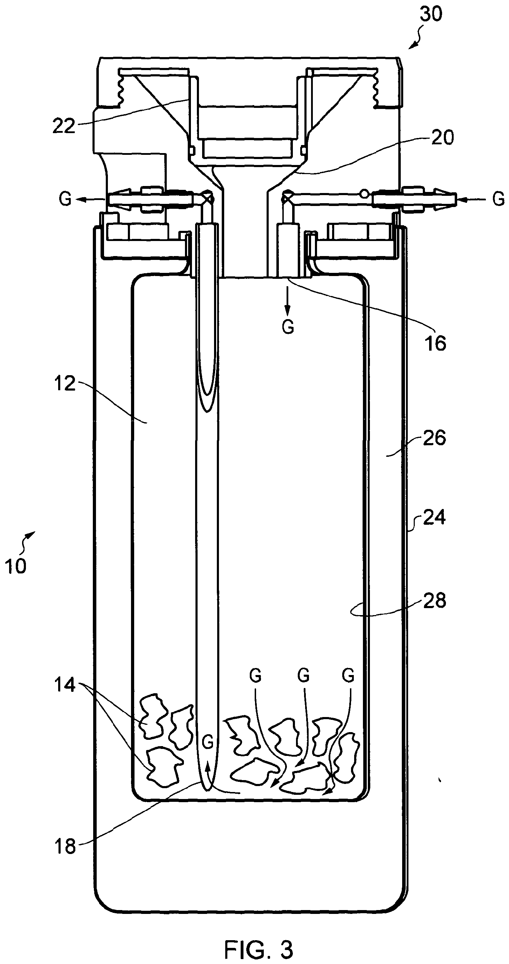

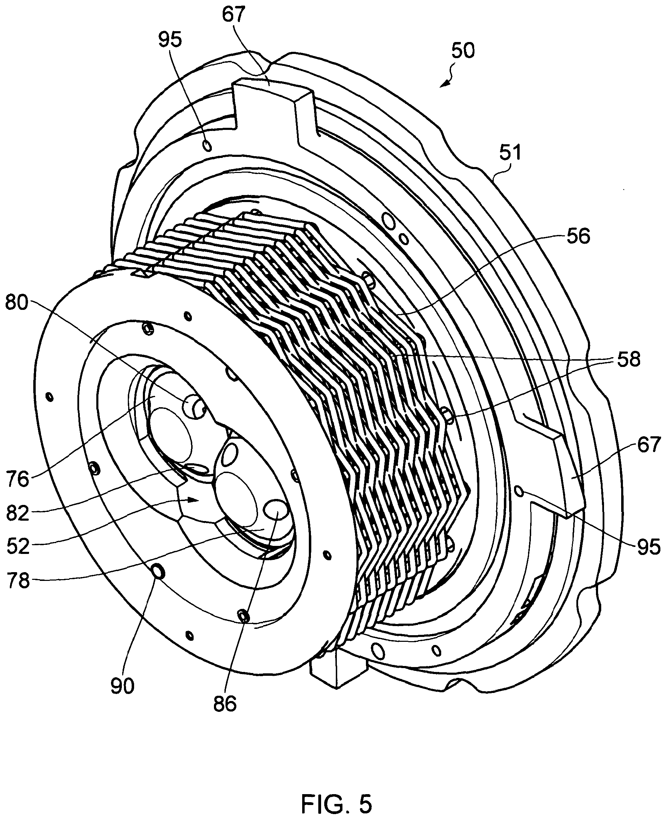

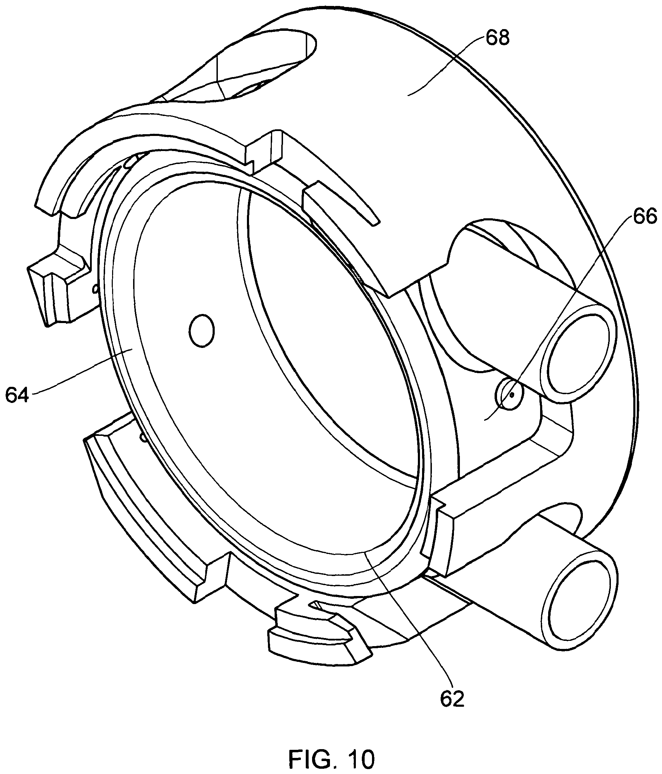

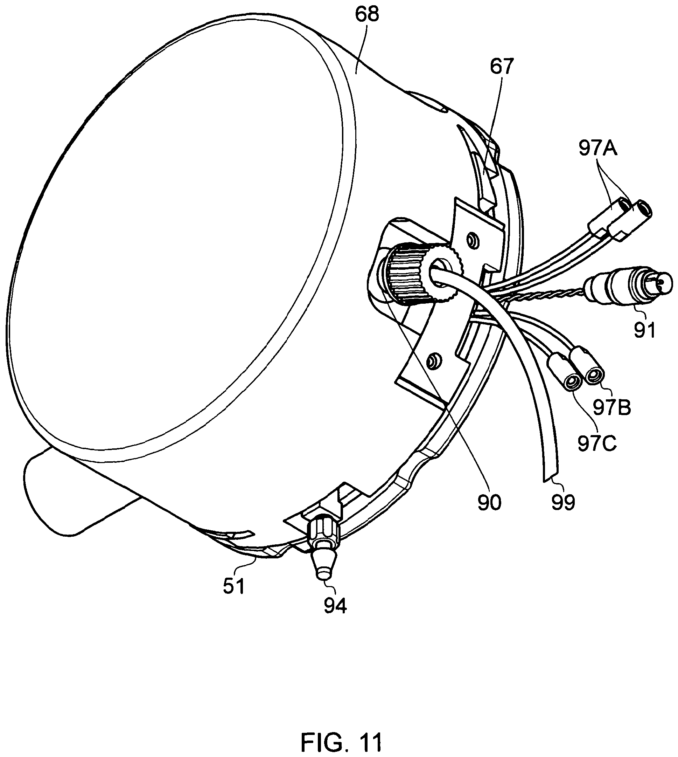

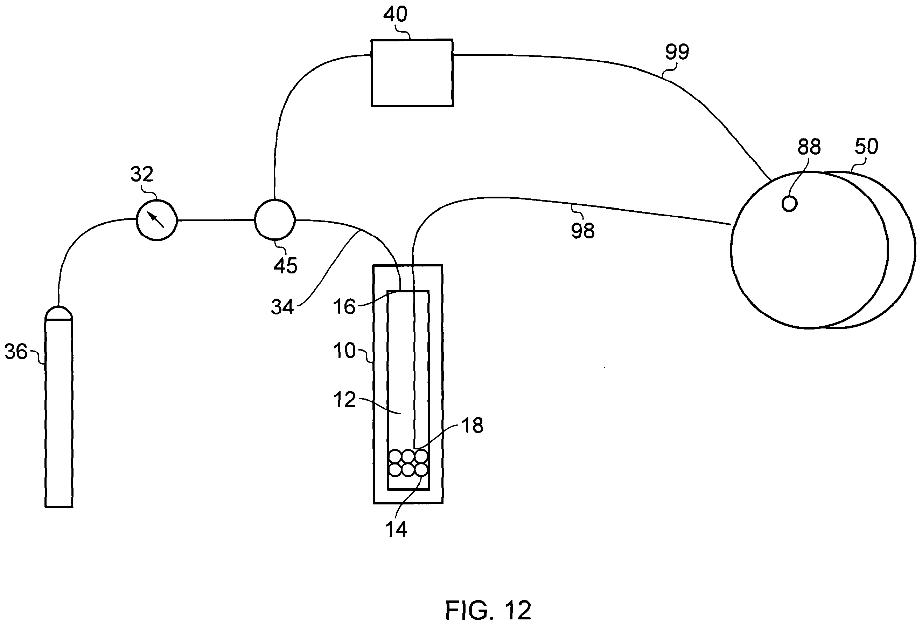

Preferred embodiments of the present invention will now be described. In particular, the embodiments of the present invention include a chiller as shown in Figures 3-4, a reaction vessel as shown in Figures 5-11 and the overall apparatus for conducting reactions at a low temperature as shown in Figure 12.

Figure 3 shows a cross-section through a chiller 10 according to an embodiment of an aspect of the present invention. The chiller 10 comprises a cavity 12 which can be of any size and shape but typically, as shown, is essentially cylindrical with a capacity of approximately 2 litres. The cavity 12 contains, in use, a plurality of lumps of a coolant substrate 14. These lumps of coolant substrate are preferably irregularly shaped so that, when placed in the cavity 12, they do not fit perfectly and have gaps between them to allow for gas flow through the coolant substrate as a whole and around the individual lumps 14 as indicated by the arrows G.

The cavity 12 has an entry port 16 located near the top of the cavity and an exit port 18 located near the bottom of the cavity to allow for flow of gas through the cavity and past the coolant substrate. Preferably the exit port 18 is located close to, but not directly at, the lowest point of the cavity when the chiller is placed on a level surface, so that the exit port 18 is not blocked by any dirt or other solid matter that may end up in the cavity 12.

Whilst the chiller 10 shown in Figure 3 has the entry port 16 at the top of the cavity 12 and the exit port 18 at the bottom, and this is the preferred arrangement for thermal circulation reasons, it is not necessary for this arrangement to be adopted. Indeed, the entry and exit ports could be reversed. It is preferable that the entry and exit ports are located at opposite ends of the cavity 12 so that the gas passing through the cavity 12 has to pass over the maximum amount of coolant substrate 14 before exiting the cavity 12, thereby achieving the greatest cooling effect possible on the gas.

The preferred coolant substrate is dry ice (solid carbon dioxide/CO₂). However the coolant substrate may be made from different substances, depending on the desired output temperature of the chilled gas and the resources available. For example, for reactions in conditions only slightly below ambient, and above 0°C, ice could be used as the coolant substrate. Alternatively, the coolant substrate could be metal or ceramic which has been cooled to a predetermined temperature prior to being placed in the chiller.

The advantages of using dry ice as the coolant substrate are that it has a well-defined and unchanging surface temperature (-78°C) at which the solid CO₂ sublimes to gaseous CO₂. In contrast, a non-expendable coolant substrate, such as a metal or a ceramic, will have a varying surface temperature over the time it is in use as heat is transferred to it from the passing gas. Further, since CO₂ sublimes directly to a gaseous form, the evaporated CO₂ can be immediately entrained in the gas flow over the remaining coolant substrate and out of the chiller, and so does not block the exit port 18. In contrast, if ice was used as the cooling substrate, it would melt and the resultant liquid water would have to be periodically removed from the cavity 12 to ensure that the gas flow was not obstructed.

It has been further found that using dry ice as the coolant substrate allows a highly uniform temperature of the cooled gas exiting the chiller and being conducted to the reaction vessel, and that an exit gas temperature of approximately -76°C can be achieved even after the gas has travelled up to 1 metre along an insulated pipe from the exit port 18. This can only be achieved if the exit port 18 has a minimum diameter of 3.5 mm. As a result of having an exit port 18 with this minimum diameter, it has been found that the flow of gas over the dry ice not only results in a cooling, by conduction, of the gas itself, but in the entraining of small particles of dry ice.

These entrained particles subsequently sublime to gas and, in doing so, maintain a low temperature of the cooled gas.

The cavity 12 has an opening 20 at the top of the chiller 10 to allow the coolant substrate 14 to be placed into the cavity 12, and the cavity 12 to be cleaned if required. This opening 20 can be sealed, for example by a screw-in lid 22 as shown in Figure 3, both to seal the cavity 12 at a pressure above atmospheric and to insulate the cavity 12. The lid 22 is insulated.

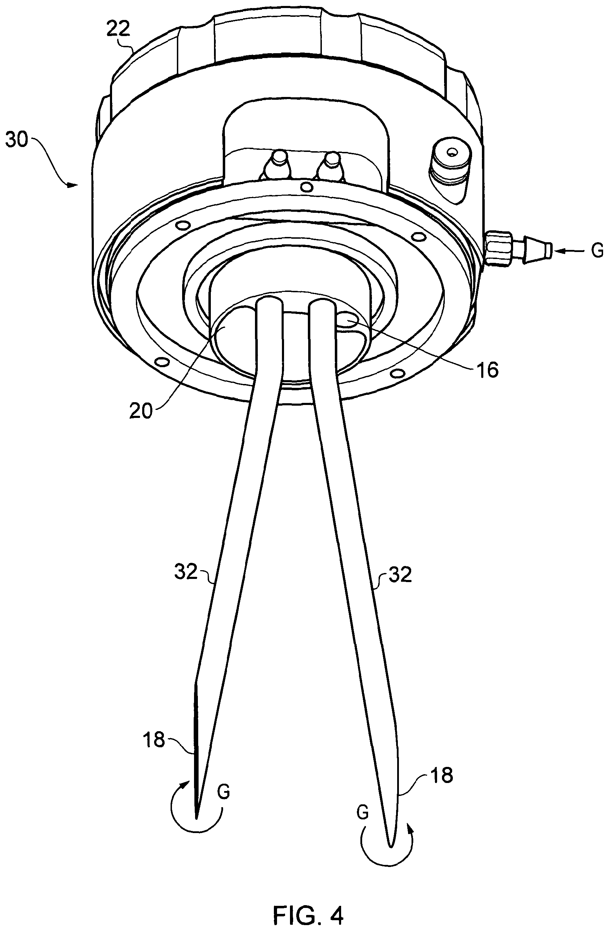

Figure 4 shows a perspective view of the upper portion 30 of the chiller 10 with the flask portion removed. In the embodiment shown, two exit ports 18 are provided to promote uniform gas flow through the chiller 10 and reduce the amount of stagnation in the lower portions of the chiller 10. Further exit ports can be provided, although additional ports will require additional pipes 32 which conduct the chilled gas from the exit ports 18 to the reactor vessel, and the space at the top of the chiller 10 may restrict the number of such pipes 32. The exit ports 18 are formed as angled cuts through the end of pipes 32 which conduct the chilled gas from the inside of the chiller 10 to the reactor vessel. This configuration of the exit ports 18 minimises the risk of all of the exit ports 18 being blocked by the coolant substrate 14.

The cavity 12 is insulated by an outer shell 24. In the preferred embodiment shown in Figure 3, this outer shell 24 encloses a vacuum chamber 26 which surrounds the cavity 12 and insulates it from the surrounding air. Alternatively or additionally, the outer shell may be made from insulating material (material with a low heat conductivity) such as a solid foam. The inside surface 28 of the cavity 12 may have a reflective coating to further insulate the contents of the cavity 12.

Typical chillers according to embodiments of the present invention have cavities with capacities of between 1 and 5 litres, particularly between 2 and 3 litres.

A chiller with a capacity of 2 litres or similar according to an embodiment of the present invention can therefore be provided which can be set on the laboratory bench adjacent the reactor vessel in which the low temperature reaction is being conducted. This is not only convenient in that it avoids pipes carrying coolant from running across other parts of the laboratory, but also minimises the importance of insulation of such pipes and/or the temperature gained by the coolant between its point of lowest temperature and the reaction vessel.

Furthermore, if it is desired to conduct multiple low temperature reactions in series, multiple chillers can be provided without significant constraints on space. The output from the reaction chamber of one chilled reaction vessel can be fed into the reaction chamber of a second chilled reaction vessel, and each reaction vessel cooled by a supply of chilled gas from a separate chiller according to an embodiment of the invention.

As shown in Figure 12, the entry port 16 is connected by a pipe 34 to a regulator 32 which is connected to the pressurised gas source 36. The regulator 32 acts to reduce the pressure of the gas from the pressurised gas source 36 to a lower pressure. In the present embodiment, the regulator 32 acts to reduce the pressure from approximately 10 bar in the pressurised gas source (the pressure supplied from a typical pre-regulated compressed gas cylinder - nitrogen in cylinders is typically stored at 230 bar, but regulated at the cylinder exit to 10 bar) to 0.5 bar gauge pressure (i.e. the overpressure above atmospheric) for supply to the chiller 10 and onwards through the apparatus.

There are two principal reasons for the use of the regulator 32. The first is that, in many jurisdictions (including the UK), there are safety regulations which place requirements on any sealed vessel which is intended to contain a gas above a certain pressure (the applicable UK regulations are the Simple Pressure Vessels (Safety) Regulations 1991, which set a limit of a gauge pressure of 0.5 bar, above which the vessel must satisfy additional requirements as to its construction and certification). Since the apparatus of this embodiment uses the pressure of the supplied gas to cause flow through the apparatus, but does not require pressures above 0.5 bar gauge pressure to achieve this flow, the chiller can be made simpler, cheaper and safer by regulating the pressure of the gas supply at the start of its flow through the apparatus.

The second reason for regulating the pressure of the gas supply is to provide for efficient use of the gas supply. If the gas supply was connected to the apparatus and not regulated, then the volume flow rate of gas through the apparatus would be significantly greater. This would not only deplete the pressurised gas source 36 faster (necessitating more regular changes of the gas source where it is an individual cylinder, or more regular refills of a larger store), but would also reduce the cooling effectiveness of the gas in the reaction vessel, since the gas would spend a shorter time in contact with both the coolant substrate 14 and the surfaces of the reactor chamber 56 in the reaction vessel 50.

Therefore, whilst regulation of the input gas to a gauge pressure of less than 0.5 bar is applicable in the UK, alternative pressures may be selected for use of the apparatus in different countries, but it is advantageous in any event that the regulator reduces the pressure of the pressurised gas source to a gauge pressure of less than 1.0 bar, more preferably to a gauge pressure of less than 0.7 bar.

Operating at a gauge pressure of 0.5 bar, and maintaining a demand temperature of -40°C for the reaction chamber, an apparatus such as that shown in Figure 12, and described below, can operate using only approximately 0.2 kg of dry ice per hour.

Any appropriate source of pressurised gas can be used with the chillers and reaction vessels of the present invention. Ideally the pressurised gas is dry, so that there are no problems with icing when the gas is cooled below 0°C. The preferred source of pressurised gas is compressed nitrogen. Compressed nitrogen is readily available in cylinder form and already in use in most laboratories and is dry and does not contain any component which will solidify or condense in the temperature range of reactions generally being considered. Compressed nitrogen is also stored in larger quantities by some companies. Alternatively, compressed dry air may be used.

As shown in Figure 12, the exit port 18 from the cavity 12 is connected by an insulated pipe 98 to the reaction vessel 50.

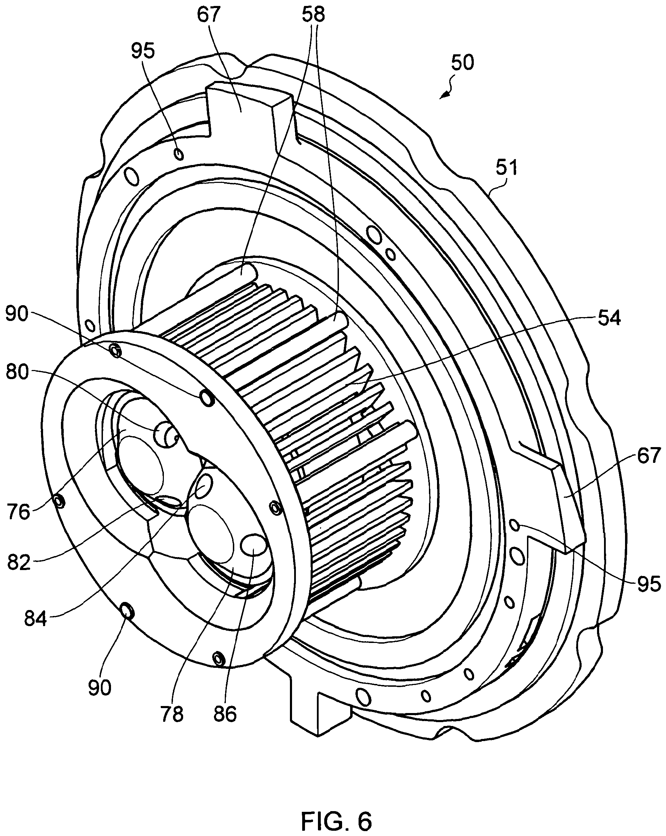

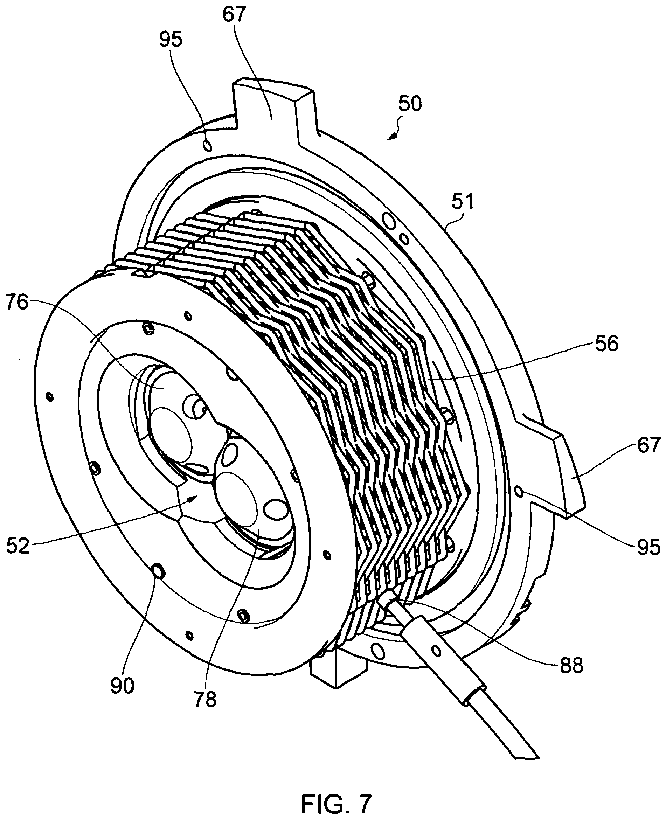

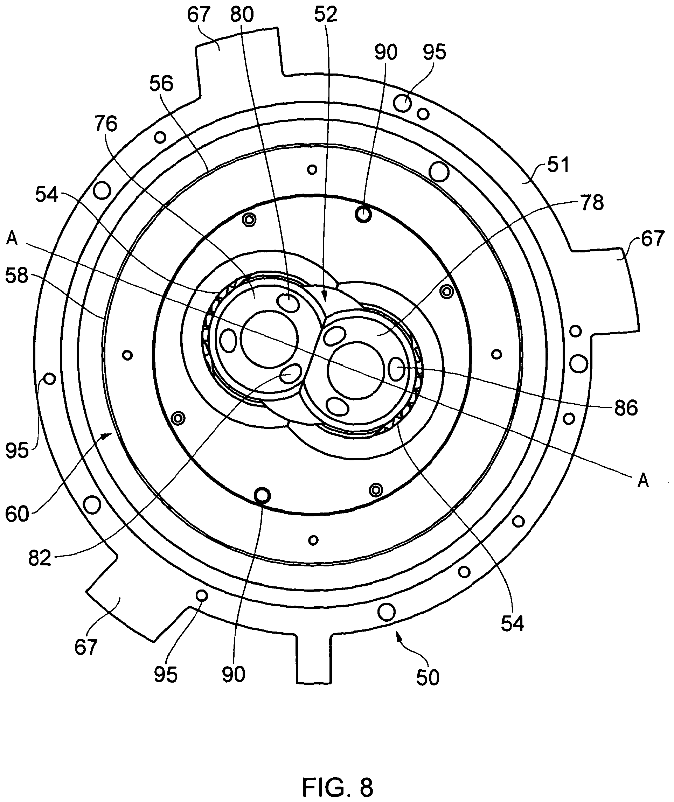

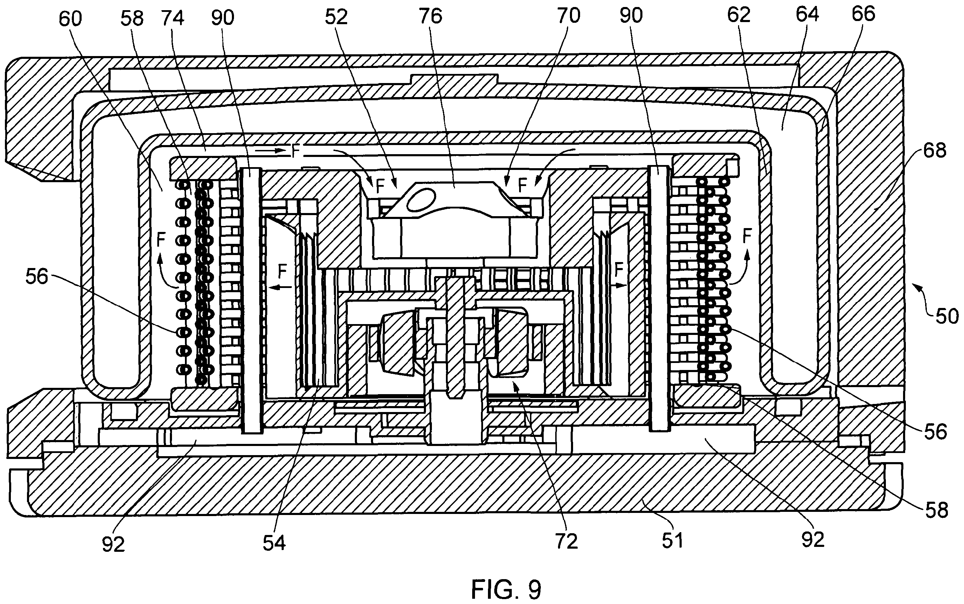

Figure 5 shows a perspective view of a reaction vessel 50 according to an embodiment of the invention with the outer casing and supporting structure removed. Figure 6 is the same perspective view, but with the reactor chamber removed to show further detail of the inner components. Figure 7 is the same perspective view as Figure 5, showing the temperature sensor. Figure 8 is a plan view of the reaction vessel 50 with the outer casing removed. Figure 9 shows a cross-section through the reaction vessel 50 along the line marked A-A in Figure 8 and showing the reaction vessel 50 in complete form.

Reaction vessel 50 is generally cylindrical and has a base 51 on which a set of concentric components are mounted. Viewed as a whole in Figure 9, the reaction vessel 50 comprises, from the inside outwards, a central chamber 52, a centrifugal fan 54, a reaction chamber 56 which is an elongate tube wound around a series of posts 58, an exhaust cavity 60, an inner shell 62, an insulating vacuum cavity 64, an outer shell 66, and a support casing 68. The volume contained inside the inner shell 62 will be referred to as a circulation chamber 70.

A cooling medium, which may be liquid nitrogen, crushed dry ice or cold gas from a chiller (preferably a chiller such as that described in the embodiment above) is supplied to supply port 94 in the reaction vessel 50 which feeds into the central chamber 52 where it cools the gas within that central chamber, for example by evaporating or subliming, or by mixing with gas within the central chamber.

The size and position of the supply port 94 may differ in particular depending on the form of the cooling medium being used.

The centrifugal fan 54 is driven by an electric motor 72 and causes gas from the central chamber to be forced outwards past the reaction chamber 56 to the exhaust cavity 60. A return passage 74 allows gas arriving in the exhaust cavity 60 to be returned to the central chamber 52 thereby creating a circulation pathway indicated on Figure 9 by arrows F of cold gas around the circulation chamber 70 and a constant flow of cold gas past the reaction chamber 58. Exhaust ports 90 are connected to the exhaust cavity 60 and allow a flow of gas out of the circulation chamber 70 through an exit cavity 92 to exit ports 95 to the outside, thereby keeping the pressure inside the circulation chamber 70 constant.

The centrifugal fan 54 is made from a conductor such as aluminium (or any other metal, although metals with lower specific heat capacities are preferable as they allow for more rapid changes of operating temperature), which ensures that it is at uniform temperature and once it has been initially cooled to the temperature of the gas circulating in the circulation chamber 70 it does not affect the temperature of the gas passing through it.

The fan 54 rotates at high speed (preferably between 1,000 and 5,000 rpm, preferably between 2,000 and 4,000 rpm and typically at 2,500 rpm) and as well as forcing circulation of the gas inside the circulation chamber 70 agitates the gas to ensure that the flow in the circulation chamber is relatively uniform over all parts of the reaction chamber 56, and is non-laminar, thereby ensuring uniform temperature distribution of the outer surface of the reaction chamber 56 (and consequently along the length of the inside of the reaction chamber 56) .

The reaction chamber 56 is an elongate tube through which the reagents flow whilst the reaction is being conducted. By using an elongate tube as the reaction chamber 56, the time for which the reagents are mixed in the reaction chamber 56 can be controlled by controlling the flow rate of reagents into the chamber or by changing the reaction chamber for one having a different internal volume. The elongate tube provides for a large surface area of the reaction chamber 56, which provides for the maximum area for heat transfer between the cold gas in the circulation chamber 70 and the reaction chamber 56. This ensures that the reaction chamber 56 as a whole as well as the contents of the reaction chamber 56 are maintained at the desired temperature by the cold gas, and that there is no temperature gradient within the reaction chamber 56. Furthermore, the reaction chamber 56 can be wound in a helical manner to form a cylindrical structure as shown in Figures 5, 7 and 9, thereby allowing the reaction chamber 56 to be arranged in a compact manner and the concentric arrangement of the components of the reaction vessel achieved.

As shown in Figures 5, 7 and 9, the reaction chamber 56 is wound in a weave pattern around the posts 58. This weave arrangement maximises the flow of the cold gas in the circulation chamber 70 over the surface of the reaction chamber 56, allowing the cold gas to pass between the coils of the reaction chamber 56, without the need to provide additional structural support to ensure separation of the coils of the reaction chamber 56. The weave arrangement also interrupts the direct flow of the gas from the centrifugal fan 54 and further ensures that the gas flow over the reaction chamber 56 is agitated and non-laminar.

In the reaction vessel 50 shown in Figures 5-11, the central chamber 52 contains two mixing vessels: a pre-mixing vessel 76 and a quench vessel 78. As these mixing vessels are within the circulation chamber 70, they are also cooled to the desired reaction temperature by the passage of the gas around the circulation chamber 70.

The pre-mixing vessel 76 allows combination and mixing of the reagents prior to their passing through the reaction chamber 56. An output 80 from the pre-mixing vessel 76 is therefore connected (connection not shown) to the reaction chamber 56 and the pre-mixing vessel 76 has a plurality of inputs 82 for the supply of reagents.

The quench vessel 78 allows the reaction being carried out in the reaction chamber 56 to be quenched before the reaction mixture leaves the low temperature environment of the reaction vessel 56, thereby preventing incomplete reactions suddenly being accelerated by the passage of the reaction mixture to an area of higher temperature. The quench vessel 78 has an input (not shown) which is connected to the output end of the reaction chamber 56, an input 84 which can be connected to a supply of quench solution and an output 86, which is the ultimate output of the reaction vessel 50. The quench solution is also passed through a pre-cooling tube (as described below for reagents) to ensure the quench solution is at the temperature of the reactor.

Just as it is undesirable for the reaction mixture to leave the low temperature environment of the reaction vessel 50 before the reaction has either completed or been quenched, it is also undesirable for the reagents or quench solution to be mixed at a higher temperature than the reaction is intended to be carried out at (e.g. room temperature) before they enter the pre-mixing vessel 76 or the reaction chamber 56 as any reaction (which may be different to the desired reaction, or may occur at an undesirable rate) is likely to commence immediately on mixing.

Accordingly, the reaction vessel 50 may also have a plurality of pre-cooling coils (not shown) which are coils of tubing contained within the exit cavity 92. The cool gas exiting the exhaust cavity 60 via the exhaust ports 90 enters this exit cavity 92 and cools the reagents flowing in the pre-cooling coils before they enter the pre-mixing vessel 76 or the reaction chamber 56 (in an arrangement in which there is no pre-mixing vessel). In alternative arrangements, the pre-cooling coils may pass through other parts of the circulation chamber, for example in the central chamber 52, particularly if the neither of the mixing vessels 76, 78 is provided in that chamber, or the exhaust cavity 60.

Reagents and the quench solution enter the reaction vessel 50 through input tubes 97A and 97B, and the output from the quench vessel 78 exits the reaction vessel 50 through output tube 97C. In the embodiment shown, there are two input tubes 97A for the input of reagents, a single input tube 97B for the quench solution and a single output tube 97C, but alternative arrangements are envisaged in which there are further input or output tubes depending on the type of reaction to be conducted in the reaction vessel 50.

Power to the motor 72 driving the fan 54 is supplied through power lead 91.

The outer shell 66 and the vacuum cavity 64 insulate the circulation chamber 70 from the surrounding environment.

Base 51 has similar insulating properties, but uses solid insulation. The skilled person will appreciate that alternative arrangements may be provided to insulate the circulation chamber. However, insulation of at least part of the reaction vessel 50 using a vacuum cavity 64 is particularly advantageous as, when provided in conjunction with either a transparent outer shell 66 and support casing 68 (e.g. made from glass or transparent plastic) or viewing windows in the outer shell 66 and support casing 68, it allows visual inspection of the circulation chamber 70 and in particular the reaction chamber 56 whilst the reaction is being carried out.

To connect the support casing 68 and the base 51 of the reaction vessel, the base 51 has a number of locking lugs 67 which interact with the support casing 68 to hold the base and support casing together.

A temperature sensor 88 is provided which senses the temperature of the reaction chamber 56. The preferred arrangement uses a platinum thin film PT100 sensor, which has been found to offer a lower cost solution than a thermocouple, and also provide a greater degree of noise immunity.

The temperature sensor 88 is inserted into an entry port 90 in the outer shell 66 and positioned so as to abut the outer wall of the reaction chamber 56. In this arrangement the temperature sensor 88 does not contact the reactants flowing in the reaction chamber 56. However, an extremely accurate temperature measurement of the temperature of the fluid passing through the reaction chamber 56 can be achieved due to the direct contact with the wall of the reaction chamber.

The entry port 90 for the temperature sensor and the temperature sensor 88 interact so as to seal the entry port when the temperature sensor is in place and thus prevent chilled gas circulating in the circulation chamber 70 from escaping through the entry port 90. A cover or similar mechanism may be provided for sealing the entry port 90 if the temperature sensor is not connected.

The temperature sensor 88 provides an electrical output through cable 99 which forms an input into a controller 40, as shown in Figure 12, which is arranged to control the temperature of the reaction chamber 56 at a desired temperature for the reaction being conducted.

The desired temperature can be set by a data entry into the controller 40. This may be means of a manual input device such as a dial or buttons, or through entry of an appropriate value on a computer which is connected to or forms part of the controller 40.

In the embodiment shown, the controller 40 controls the temperature of the reaction chamber 56 by controlling the input of gas to the chiller 10. In alternative embodiments, where the cooling medium is not supplied to the reaction vessel 50 from a chiller 10, the controller 40 may control the temperature of the reaction chamber 56 by controlling the flow of cooling medium to the supply port 94.

This may be achieved in a number of ways. The preferred way of controlling the temperature where a chiller 10 is used is to control the amount of dry gas being input to the chiller 10 and thereby control the amount of cool gas exiting the chiller and entering the reaction vessel 56. In the embodiment illustrated, this is achieved through the controller 40 controlling a valve 45 which permits, restricts or prevents flow of the dry gas into the chiller 10 to the reaction vessel 50. Arrangement of the valve 45 in the gas flow prior to the chiller 10 is preferred as it avoids the problems with icing of the valve(s) in the cold part of the gas flow. In particular, the flow of gas through the valve 45 may be pulsed, and the overall amount of gas flowing may be controlled by changing the time ratio or proportion of the "on" and "off" pulses to each other.

Similar pulsed arrangements may be used for the supply of liquid or gaseous cooling medium to the reaction vessel 50 from other sources, particularly where the sources are pressurised. Alternatively, for a liquid cooling medium, a pump may be used which is controlled by the controller 40 to deliver known quantities of cooling medium in a continuous adjustable rate or through a pulsed arrangement. A further alternative, for a solid cooling medium, is a augur filled with said solid cooling medium, the augur being controlled by the controller 40 to deliver known quantities of the cooling medium in a continuous, adjustable rate or in a quantised manner, for example by using a stepper motor to drive the augur.

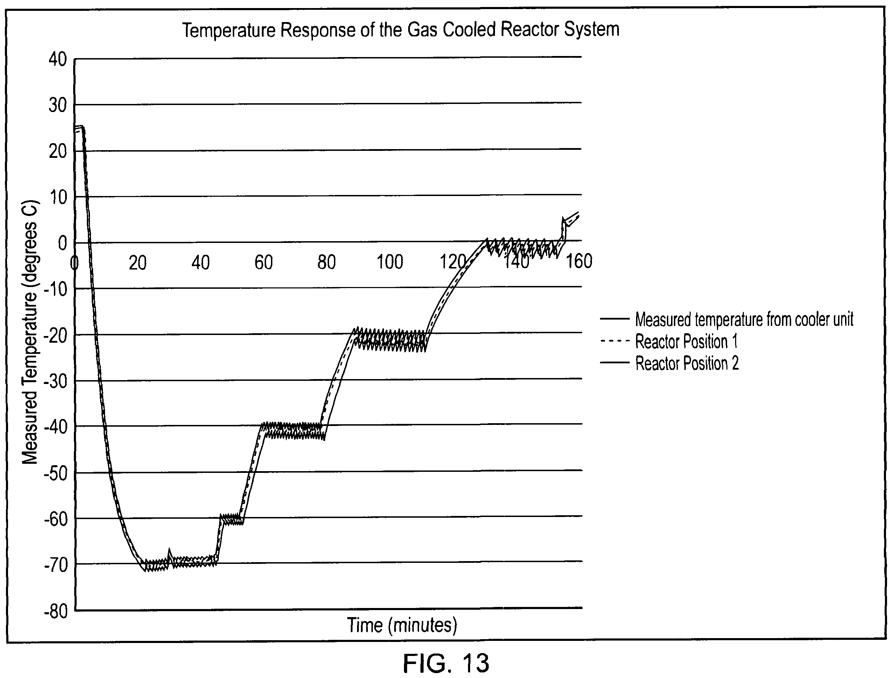

Figure 13 shows a graph of temperature measurements taken during testing of the apparatus shown in Figure 12. In particular, Figure 13 shows three traces which represent the measured temperatures at the chiller 10 and two readings from temperature sensors located in the reaction vessel 50. Except where the readings substantially overlap (readings up to 55 minutes on the x-axis of Figure 13), the upper reading is that from the chiller 12.

The temperature profiles of Figure 13 show the performance of the apparatus, starting from an ambient temperature of 25°C, in response to a series of demand temperatures, as set by the controller 40, of respectively -70°C (from time zero on the x-axis of Figure 13), -60°C (from time 45 minutes), -40°C (from time 55 minutes), -20°C (from time 75 minutes) and 0°C (from time 110 minutes).

From Figure 13 it can be seen that the apparatus as a whole reaches an operating temperature of -70°C in approximately 20 minutes from the demand for that temperature being set. This is a considerable improvement over known chiller apparatuses, where such temperatures in a reaction vessel can only be achieved 30-120 minutes from the low temperature being demanded.

The effect of pulse control of the gas input to the chiller can be seen in the "saw-tooth" temperature readings at each of the steady temperatures. Furthermore, each demand temperature is reached without appreciable overshoot in either the positive or negative direction, and so the apparatus of this embodiment demonstrates the high degree of temperature control that can be achieved by using an apparatus according to the above embodiment.

In order to increase the response rate of the apparatus to demands for increases in the temperature in the reaction chamber, it is possible to provide an intermediate heater between the chiller and the reaction vessel, rather than relying on heating from the surrounding environment to raise the temperature. However, as the response times achievable are generally comparatively rapid, such an arrangement is generally not necessary.

The rapid responses and accuracy of the temperature control result from the use of chilled gas as a coolant, which is much more controllable than a liquid coolant, and in particular has a lower unit heat capacity, so the gas in the circulation chamber of the reaction vessel is able to change temperature rapidly without using an additional heater. Also, by arranging the temperature sensor as a contact sensor on the outer wall of the reaction chamber, the controller is able to accurately control the input of chilled gas to regulate the temperature of the gas circulating in the reaction vessel.

## Claims

1. A reaction vessel (50) for conducting low temperature reactions, **characterised in that** the reaction vessel comprises:
a circulation chamber (70) with an entry port (94) for the supply of a cooling medium at a temperature below ambient to said circulation chamber and an exhaust port (95); and
a reaction chamber (56) and a centrifugal fan (54) arranged concentrically inside the circulation chamber (70) so that gas in said circulation chamber is forced radially outwards by the operation of said fan,
wherein the movement of the gas past the reaction chamber maintains the temperature of reactants inside the reaction chamber at a temperature below ambient.

2. A reaction vessel (50) according to claim 1 further comprising a return passage (74) for returning gas from the outside of the circulation chamber (70) to a central portion (52) of the circulation chamber, thereby forming a pathway for re-circulation of gas through the circulation chamber and past the reaction chamber (56).

3. A reaction vessel (50) according to claim 1 or claim 2 wherein the reaction chamber (56) is located radially outside said fan (54).

4. A reaction vessel (50) according to any one of claims 1 to 3, further comprising a temperature sensor (88) arranged to measure the temperature of the reaction chamber (56).

5. A reaction vessel (50) according to any one of claims 1 to 4 further comprising a plurality of pre-cooling units which are arranged to conduct reagents from outside the reaction vessel to said reaction chamber (56) and to reduce the temperature of said reagents prior to their mixing.

6. A reaction vessel (50) according to any one of claims 1 to 5 further comprising a pre-mixing vessel (76) having a plurality of inputs and an output which is connected to an input to said reaction chamber (56), such that reagents can be mixed in said pre-mixing vessel prior to entering said reaction chamber,
wherein said pre-mixing vessel is located in said circulation chamber (70), and so is also maintained at a temperature below ambient by said circulation of gas in the circulation chamber.

7. A reaction vessel (50) according to any one of claims 1 to 6 further comprising a quench vessel (78) located in said circulation chamber, which is connected to the output of said reaction chamber (56) and has an input for supply of a quenching solution, thereby allowing the reaction in said reaction chamber to be quenched prior to exiting the reaction vessel and whilst at a reduced temperature.

8. A reaction vessel (50) according to any one of claims 1 to 7 in which said reaction chamber (56) is an elongate tube which is wound into a cylindrical configuration inside said circulation chamber.

9. A reaction vessel (50) according to any one of claims 1 to 8 wherein said reaction chamber (56) is removable.

10. A reaction vessel (50) according to any one of claims 1 to 9 further comprising an insulating layer (64) arranged around the outside of said circulation chamber (70) .

11. A reaction vessel (50) according to claim 10 wherein the insulating layer (64) includes a vacuum chamber.

12. A reaction vessel (50) according to any one of claims 1 to 11 wherein the cooling medium is crushed dry ice.

13. A reaction vessel (50) according to any one of claims 1 to 12 wherein the cooling medium is liquid nitrogen.

14. An apparatus for conducting reactions at low temperature, **characterised in that** the apparatus comprises:
a pressurised gas source (36);
a chiller (10) comprising:
an insulated vessel having a cavity (12) and an entry port (16) and an exit port (18) to said cavity, wherein:
said entry port (16) is connected to said gas source (36) via a regulator (32) which is arranged to lower the pressure of a gas input to said regulator from a pressurised source to a supply pressure above atmospheric; and
said exit port (18) is arranged to be connected to the vessel to be cooled,
said cavity (12) containing, in use, one or more pieces of a coolant substrate (14) having a temperature below ambient, such that when pressurised gas is input into the apparatus, it passes over said coolant substrate and is supplied to said vessel to be cooled at a temperature below ambient; and
a reaction vessel (50) according to any one of claims 1 to 13 connected to said chiller (10) such that gas flows from said pressurised source (36), is lowered in temperature in said chiller and passes to the entry port (94) of the circulation chamber (52).

15. A method of maintaining a temperature in a reaction chamber (56) of a reaction vessel (50) below the ambient temperature, wherein the reaction vessel has a circulation chamber (70) in which said reaction chamber is located, the reaction chamber containing, in use, the reagents to be reacted, **characterised in that** the method comprises the steps of:
introducing a cooling medium to said circulation chamber (70) to produce cooling gas in said circulation chamber; and
circulating said cooling gas within said circulation chamber (70) to maintain the temperature of the reaction chamber at a predetermined target temperature.

## Patentansprüche

1. Reaktionsgefäß (50) zur Durchführung von Reaktionen bei niedrigen Temperaturen, **dadurch gekennzeichnet, dass** das Reaktionsgefäß Folgendes umfasst:
eine Zirkulationskammer (70) mit einer Eintrittsöffnung (94) zur Zufuhr eines Kühlungsmediums in einer Temperatur unter Umgebungstemperatur zu der Zirkulationskammer und einer Auslassöffnung (95); und
eine Reaktionskammer (56) und einen Radiallüfter (54), der konzentrisch innerhalb der Zirkulationskammer (70) angeordnet ist, sodass das Gas in der Zirkulationskammer durch den Betrieb des Lüfters radial nach außen gepresst wird,
wobei die Bewegung des Gases vorbei an der Reaktionskammer die Temperatur von Reagenzien innerhalb der Reaktionskammer auf eine Temperatur unter Umgebungstemperatur hält.

2. Reaktionsgefäß (50) nach Anspruch 1, weiters umfassend einen Rückführkanal (74), um Gas vom Äußeren der Zirkulationskammer (70) in einen Mittelteil (52) der Zirkulationskammer zurückzuführen, wodurch ein Rezirkulationsweg von Gas durch die Zirkulationskammer und vorbei an der Reaktionskammer (56) gebildet wird.

3. Reaktionsgefäß (50) nach Anspruch 1 oder Anspruch 2, wobei die Reaktionskammer (56) radial außerhalb des Lüfters (54) angeordnet ist.

4. Reaktionsgefäß (50) nach einem der Ansprüche 1 bis 3, weiters umfassend einen Temperatursensor (88), der so angeordnet ist, dass er die Temperatur der Reaktionskammer (56) misst.

5. Reaktionsgefäß (50) nach einem der Ansprüche 1 bis 4, weiters umfassend eine Vielzahl von Vorkühleinheiten, die so angeordnet sind, dass sie Reagenzien vom Äußeren des Reaktionsgefäßes in die Reaktionskammer (56) leiten und die Temperatur der Reagenzien vor dem Mischen reduziert.

6. Reaktionsgefäß (50) nach einem der Ansprüche 1 bis 5, weiters umfassend ein Vormischgefäß (76) mit einer Vielzahl von Eingängen und einem Ausgang, der mit einem Eingang in die Reaktionskammer (56) verbunden ist, sodass Reagenzien in dem Vormischgefäß vor dem Einlassen in die Reaktionskammer gemischt werden können,
wobei das Vormischgefäß in der Zirkulationskammer (70) angeordnet ist und so durch die Zirkulation von Gas in der Zirkulationskammer auch in einer Temperatur unter Umgebungstemperatur behalten wird.

7. Reaktionsgefäß (50) nach einem der Ansprüche 1 bis 6, weiters umfassend ein Abschreckgefäß (78), das in der Zirkulationskammer angeordnet ist und das mit dem Ausgang der Reaktionskammer (56) verbunden ist und einen Eingang für die Zufuhr einer Abschrecklösung aufweist, wodurch der Reaktion in der Reaktionskammer ermöglicht wird, abgeschreckt zu werden, bevor sie das Reaktionsgefäß verlässt, und während sie eine reduzierte Temperatur aufweist.

8. Reaktionsgefäß (50) nach einem der Ansprüche 1 bis 7, wobei die Reaktionskammer (56) ein längliches Rohr ist, das innerhalb der Zirkulationskammer in eine zylindrische Konfiguration gewickelt ist.

9. Reaktionsgefäß (50) nach einem der Ansprüche 1 bis 8, wobei die Reaktionskammer (56) entfernbar ist.

10. Reaktionsgefäß (50) nach einem der Ansprüche 1 bis 9, weiters umfassend eine Isolierschicht (64), die rund die Außenseite der Zirkulationskammer (70) angeordnet ist.

11. Reaktionsgefäß (50) nach einem der Ansprüche 1 bis 10, wobei die Isolierschicht (64) eine Vakuumkammer umfasst.

12. Reaktionsgefäß (50) nach einem der Ansprüche 1 bis 11, wobei das Kühlmedium zerstoßenes Trockeneis ist.

13. Reaktionsgefäß (50) nach einem der Ansprüche 1 bis 12, wobei das Kühlmedium flüssiger Stickstoff ist.

14. Vorrichtung zum Durchführen von Reaktionen bei niedriger Temperatur, **dadurch gekennzeichnet, dass** die Vorrichtung Folgendes umfasst:
eine Quelle für unter Druck stehendes Gas (36);
einen Kühler (10), der Folgendes umfasst:
ein isoliertes Gefäß mit einem Innenraum (12) sowie einer Eingangsöffnung (16) und einer Ausgangsöffnung (18) zu dem Innenraum, wobei:
die Eingangsöffnung (16) mit der Gasquelle (36) über einen Regulator (32) verbunden ist, der so angeordnet ist, dass der Druck eines Gaseingangsstroms in den Regulator von einer Druckquelle auf einen Zufuhrdruck über Atmosphärendruck verringert wird; und
die Ausgangsöffnung (18) so angeordnet ist, dass sie mit dem zu kühlenden Gefäß verbunden ist,
der Innenraum (12) bei Verwendung ein oder mehrere Elemente eines kühlenden Substrats (14) mit einer Temperatur unter Umgebungstemperatur enthält, sodass, wenn unter Druck stehendes Gas in die Vorrichtung eingeführt wird, dieses über das kühlende Substrat vorbeizieht und zu dem Gefäß zugeführt wird, um auf eine Temperatur unter Umgebungstemperatur abgekühlt zu werden; und
ein Reaktionsgefäß (50) gemäß einem der Ansprüche 1 bis 13, das mit dem Kühler (10) verbunden ist, sodass Gas von der Druckquelle (36) fließt, im Kühler dessen Temperatur verringert wird und es zur Eingangsöffnung (94) der Zirkulationskammer (52) strömt.

15. Verfahren zum Beibehalten einer Temperatur in einer Reaktionskammer (56) eines Reaktionsgefäßes (50) unter Umgebungstemperatur, wobei das Reaktionsgefäß eine Zirkulationskammer (70) umfasst, in der die Reaktionskammer angeordnet ist, wobei die Reaktionskammer bei Verwendung die umzusetzenden Reagenzien umfasst, **dadurch gekennzeichnet, dass** das Verfahren die folgenden Schritte umfasst:
Einführen eines Kühlmediums in die Zirkulationskammer (70), um Kühlgas in der Zirkulationskammer zu produzieren; und
Zirkulieren des Kühlgases innerhalb der Zirkulationskammer (70), um die Temperatur der Reaktionskammer auf einer festgelegten Zieltemperatur zu halten.

## Revendications

1. Cuve de réaction (50) destinée à effectuer des réactions à basse température, **caractérisé en ce que** la cuve de réaction comprend :
une chambre de circulation (70) avec un orifice d'admission (94) destiné à fournir un milieu de refroidissement à une température inférieure à la température ambiante à ladite chambre de circulation et un orifice d'évacuation (95) ; et
une chambre de réaction (56) et un ventilateur centrifuge (54) prévus de manière concentrique à l'intérieur de la chambre de circulation (70) de sorte que le gaz dans adite chambre de circulation soit forcé radialement vers l'extérieur par le fonctionnement dudit ventilateur,
dans lequel le mouvement du gaz au-delà de la chambre de réaction maintient la température des réactifs à l'intérieur de la chambre de réaction à une température inférieure à la température ambiante.

2. Cuve de réaction (50) selon la revendication 1, comprenant en outre un passage de retour (74) destiné à renvoyer le gaz de l'extérieur de la chambre de circulation (70) vers une partie centrale (52) de la chambre de circulation, afin de former un trajet de recirculation du gaz dans la chambre de circulation et au-delà de la chambre de réaction (56).

3. Cuve de réaction (50) selon la revendication 1 ou 2, dans laquelle la chambre de réaction (56) est située radialement à l'extérieur dudit ventilateur (54).

4. Cuve de réaction (50) selon l'une quelconque des revendications 1 à 3, comprenant en outre un capteur de température (88) prévu pour mesurer la température de la chambre de réaction (56).

5. Cuve de réaction (50) selon l'une quelconque des revendications 1 à 4, comprenant en outre une pluralité d'unités de pré-refroidissement qui sont prévues pour acheminer les réactifs de l'extérieur de la cuve de réaction vers ladite chambre de réaction (56) et pour réduire la température desdits réactifs avant leur mélange.

6. Cuve de réaction (50) selon l'une quelconque des revendications 1 à 5, comprenant en outre une cuve de pré-mélange (76) ayant une pluralité d'admissions et une évacuation qui est reliée à une admission de ladite chambre de réaction (56), de sorte que les réactifs puissent être mélangés dans ladite cuve de pré-mélange avant de pénétrer dans ladite chambre de réaction,
dans laquelle ladite cuve de pré-mélange est située dans ladite chambre de circulation (70), et est également maintenue à une température inférieure à la température ambiante par ladite circulation du gaz dans la chambre de circulation.

7. Cuve de réaction (50) selon l'une quelconque des revendications 1 à 6, comprenant en outre une cuve de trempe (78) située dans ladite chambre de circulation, qui est reliée à l'évacuation de ladite chambre de réaction (56) et possède une admission destinée à fournir une solution de trempe, afin de permettre à la réaction dans ladite chambre de réaction d'être trempée avant de sortir de la cuve de réaction et pendant qu'elle se trouve à une température réduite.

8. Cuve de réaction (50) selon l'une quelconque des revendications 1 à 7, dans laquelle ladite chambre de réaction (56) est un tube allongé qui est enroulé en une configuration cylindrique à l'intérieur de ladite chambre de circulation.

9. Cuve de réaction (50) selon l'une quelconque des revendications 1 à 8, dans laquelle ladite chambre de réaction (56) est amovible.

10. Cuve de réaction (50) selon l'une quelconque des revendications 1 à 9, comprenant en outre une couche d'isolation (64) prévue autour de l'extérieur de ladite chambre de circulation (70).

11. Cuve de réaction (50) selon la revendication 10, dans laquelle la couche d'isolation (64) comprend une chambre de vide.

12. Cuve de réaction (50) selon l'une quelconque des revendications 1 à 11, dans laquelle le milieu de refroidissement est de la neige carbonique broyée.

13. Cuve de réaction (50) selon l'une quelconque des revendications 1 à 12, dans laquelle le milieu de refroidissement et de l'azote liquide.

14. Appareil de réalisation de réactions à basse température, **caractérisé en ce que** l'appareil comprend :
une source de gaz pressurisé (36) ;
un refroidisseur (10) comprenant :
une cuve isolée ayant une cavité (12) et un orifice d'admission (16) et un orifice d'évacuation (18) de ladite cavité, dans laquelle :
ledit orifice d'admission (16) est relié à ladite source de gaz (36) via un régulateur (32) qui est prévu pour réduire la pression d'un gaz fourni audit régulateur par une source pressurisée jusqu'à une pression d'alimentation supérieure à la pression atmosphérique ; et
ledit orifice d'évacuation (18) est prévu pur être relié à la cuve à refroidir,
ladite cavité (12) contenant, pendant l'utilisation, un ou plusieurs morceaux d'un substrat de refroidissement (14) ayant une température inférieure à la température ambiante, de sorte que, lorsque le gaz pressurisé est fourni à l'appareil, il passe sur ledit substrat de refroidissement et soit fourni à ladite cuve afin d'être refroidi à une température inférieure à la température ambiante ; et
une cuve de réaction (50) selon l'une quelconque des revendications 1 à 13 reliée audit refroidisseur (10) de sorte que le gaz s'écoule depuis ladite source pressurisée (36), que sa température soit réduite dans ledit refroidisseur, et soit acheminé vers l'orifice d'admission (94) de la chambre de circulation (52).

15. Procédé de maintien d'une température dans une chambre de réaction (56) d'une cuve de réaction (50) sous la température ambiante, dans lequel la cuve de réaction possède une chambre de circulation (70) dans laquelle ladite chambre de réaction se trouve, la chambre de réaction contenant, pendant l'utilisation, les réactifs à faire réagir, **caractérisé en ce que** le procédé comprend les étapes consistant à :
introduire un milieu de refroidissement dans ladite chambre de circulation (70) afin de produire un gaz de refroidissement dans ladite chambre de circulation ; et
faire circuler ledit gaz de refroidissement dans ladite chambre de circulation (70) afin de maintenir la température de la chambre de réaction à une température cible prédéterminée.
